Europäisches Patentamt

European Patent Office

Office européen des brevets

(11) Publication number: **0 207 367
B1**

(12) **EUROPEAN PATENT SPECIFICATION**

(45) Date of publication of patent specification: **17.01.90**

(51) Int. Cl.⁵: **B 01 D 53/36, C 04 B 35/14, B 01 J 35/04**

(21) Application number: **86108290.7**

(22) Date of filing: **18.06.86**

(54) Catalyst for purifying exhaust gas.

(30) Priority: **20.06.85 JP 134574/85**
**20.06.85 JP 134575/85**

(43) Date of publication of application:
**07.01.87 Bulletin 87/02**

(45) Publication of the grant of the patent:
**17.01.90 Bulletin 90/03**

(84) Designated Contracting States:
**DE FR GB**

(56) References cited:
**DE-A-2 113 940**

**CHEMICAL ABSTRACTS, vol. 102, no. 18, May 1985, page 275, abstract no. 153672v, Columbus, Ohio, US; R.Ya. POPIL'SKII et al.: "Ceramics based on fused quartz and a modifying phase-strontium titanate", & IZV. AKAD. NAUK SSSR. NEORG. MATER. 1985, 21(2), 312-16**

The file contains technical information submitted after the application was filed and not included in this specification

(73) Proprietor: **Matsushita Electric Industrial Co., Ltd.**
**1006, Oaza Kadoma**
**Kadoma-shi Osaka-fu, 571 (JP)**

(72) Inventor: **Takeuchi, Yasuhiro**
**18-6, kuzuha 2-chome**
**Hirakata-shi Osaka-fu (JP)**
Inventor: **Nishino, Atsushi**
**19-9, Nansuien-cho**
**Neyagawa-shi Osaka-fu (JP)**
Inventor: **Ono, Yukiyoshi**
**46-2-307, Yamadaikehigasimachi**
**Hirakata-shi Osaka-fu (JP)**
Inventor: **Numoto, Hironao**
**4-306, Myokenzaka 6-chome**
**Katano-shi Osaka-fu (JP)**

(74) Representative: **Eisenführ & Speiser**
**Martinistrasse 24**
**D-2800 Bremen 1 (DE)**

Courier Press, Leamington Spa, England.

**Description**

The present invention relates to a catalyst for purifying exhaust gases.

The cordierite series ceramics are mostly used as ceramics small in thermal expansion coefficient in the conventional catalyst carriers for purifying exhaust gases. In addition, alumina series ceramics and mullite series ceramics are also used. However, these alumina series ceramics and mullite series ceramics have thermal expansion coefficients three through five times greater than the cordierite series ceramics, thus resulting in lower practical rate. The cordierite ceramics correspond to the formula $2MgO \cdot 2Al_2O_3 \cdot 5SiO_2$. They are composed in the component ratio of the cordierite structure from talc $(Mg_3(Si_4O_{10})(OH)_2)$, kaolin $(Al_2Si_2O_5(OH)_4)$ and alumina $(Al_2O_3)$, mixed deaired, molded, dried and sintered for manufacturing operation. The respective component % by weight of the theoretical composition cordierite is MgO 13.8%, $Al_2O_3$ 34.9%, $SiO_2$ 51.3%. The sintering temperature is about 1,400°C and the sintering is normally performed for about one week. The thermal expansion coefficient is 1.2 through $1.4 \times 10^{-6}$/degree (room temperature ~1000°C). In the alumina series and mullite series ceramics, the sintering temperature is as high as 1,300°C or more, as disclosed in Japanese Patent Publications (examined) No. 54-1564 and No. 51-20358.

In this manner, in the conventional catalyst carrier composed of cordierite series ceramics, alumina series ceramics or mullite series ceramics, the high-temperature sintering operation was performed to produce substances small in thermal expansion coefficient so as to improve the mechanical strength. Thus, these carriers of the conventional method were extremely vitrified during the sintering operation, thus reducing the specific surface area extremely, i.e., the specific surface area in the case of the cordierite series ceramics was 1 $m^2$ or lower per gram. Accordingly it is difficult to carry the catalyst substance directly on the conventional catalyst carrier. Even if the catalyst substance is successfully applied to the carrier, the product is insufficient as a catalyst for purifying exhaust gases. This is because the carried noble metal is likely to move and diffuse on the carrier under the influence of the heat, leading to sudden deterioration of the catalyst performance. Thus, in the conventional catalyst carrier composed of this type of cordierite series, alumina series, mullite series, the prior treatment, as called wash coat, in which powders such as $\gamma$-$Al_2O_3$ or the like are coated on the surface is carried beforehand. Thereafter, the catalyst substance is carried. Also, the catalyst carriers composed of the conventional cordierite series ceramics are sintered, contracted by about 30% respectively in three-axis directions during the sintering operation, and it is thus difficult to maintain the size accuracy, resulting in complications in the manufacturing process, and inferior product yield. Also, the cost becomes higher because of the high sintering temperature. Furthermore, when the thermal expansion coefficient is 1.2 through $1.4 \times 10^{-6}$ per degree (room temperature ~1,000°C), cracks are caused during the practical use through the services, and splits are also caused. In particular, in catalysts for vehicles, the thermal shock characteristics which are demanded through the higher performance of the engine have become stricter in recent years so that thermal expansion coefficients are obliged to be reduced.

From DE—A—21 13 940, a method for increasing reactivity of solid substances is known, which concerns solid state reactions, centering on the influence of intracrystalline water (lattice water) on the reactivity of solid, powdered substances subjected to sintering, fusing and such like processes in ceramics production. In the context of this prior art, aluminium-oxyhydrate and other hdyrated alumina substances are used, the water content of these substances being made use of for creating a hydrothermal process

This prior art does not concern phase boundary reactions between gases and solid catalysts.

Accordingly, an object of the present invention is to provide catalysts, for purifying exhaust gases, of lower cost, and excellent properties wherein the thermal expansion coefficient is smaller than the conventional ones, the mechanical strength is provided at the low temperatures, even in the thermal processing temperatures, and the specific surface area is large.

For the solution of these problems, the present invention is to thermally process at comparative low temperatures the composition composed of rehydratable alumina, alkali titanate and fused silica as specified in Claim 1, to provide ceramics which have property matters superior as carriers. The ceramics are provided as catalyst carriers for purifying the exhaust gases after carrying the catalyst substance as catalysts for purifying after the exhaust gases.

The re-hydratable alumina is transition alumina, such as $\rho$-$Al_2O_3$, amorphous alumina or the like, with the exception of $\alpha$-$Al_2O_3$ which is provided through the thermal cracking of the alumina hydrate.

Industrially, alumina hydrate such as alumina trihydrate or the like which is provided from, for example, Bayer process is normally brought into contact with the hot gas for a few minutes or alumina hydrate is normally heatingly retained for one minute through four hours at about 250 through 900°C under the decreased pressure, so that the loss on ignition of approximately 0.5 through 15% by weight is provided.

Then, the alkali titanate is a substance according to the general formula $M'_2O \cdot nTiO_2$, wherein M' designates the alkali metallic atom selected from lithium, sodium, potassium, rubidium, cesium, barium, strontium, calcium; n is an integral number of 1 through 8.

The catalyst carrier which is superior in thermal shock resistance although the reason is not clear, and is relatively large in specific surface area is provided through the thermal treatment of the composition composed of the above-described two components and fused silica. The catalyst carrier for purifying the exhaust gases may have molding assistant, (for example, carboxy-methylcellulose, methylcellulose) and plasticizer (glycerin, vaseline), etc. optionally added in addition to the re-hydratable alumina, the alkali titanate, and the fused silica. Also, heat-resisting material such as synthetic cordierite powder, mullite powder, chamotte or the like may be added.

It is generally known that the composition composed of bonding agent such as cement material or the like with the use of heat these heat-resistant materials is thermally processed to cause the cement agent and the synthetic cordierite powder to react to produce the new ceramics.

It is optimal in terms of thermal shock resistance that the mixing ratio between the re-hydratable alumina and the alkali titanate is within the range of (1:1) through (10:1) by weight. Also, the ratio between the re-hydratable alumina and the alkali titanate is preferable to stay within the range of the (1:1) through (1:10) by weight even in a case where the fused silica powder, the synthetic cordierite powder, the mullite powder, chamotte and so on may be added. Also, the total amount of the re-hydratable alumina and the alkali titanate is preferably 10% or more by weight in terms of pressure-resistance strength, thermal shock resistance, catalyst performance.

It is generally known that the fused silica is the smallest among the substances in thermal expansion coefficient, which is $0.5 \times 10^{-6}$/degree (room temperature through 1,000°C). Although it is known as a material for reducing the thermal expansion, it is a glass forming oxide. When it is thermally treated at the temperatures of 1,000°C or more with a mixture of the other substances (for example, alkali component such as sodium, potassium, calcium or the like, and alumina, titania, etc), crystal materials such as cristobalite or tridymite or the like are produced, the thermal expansion coefficient rapidly increases to 4 through $5 \times 10^{-6}$/degree (room temperature ~1,000°C). In this respect, it is not used conventionally as ceramics superior in thermal shock resistance like the present invention. However, composition composed of the combination among at least the re-hydratable alumina, the alkali titanate, the fused silica is thermally treated in the range of 1,100 through 1,300°C to produce the catalyst carrier, which is superior in thermal shock resistance and comparatively large in specific surface area although the reason is not apparent.

Then, the catalyst carrier produced through the present invention has a thermal expansion coefficient of $1.4 \times 10^{-6}$/degree (room temperature ~1,000°C) though it is somewhat different in compounding ratio and thermal treatment temperature. Also, the thermal shock resistance is superior with the thermal shock temperature being between 500° and 850°C. The specific surface area is 10 m²/g though it is different in the compounding ratio and the thermal treatment temperature.

These and other objects and features of the present invention will become apparent from the following description taken in conjunction with the preferred embodiment thereof with reference to the accompanying drawings, in which:

Fig. 1A, B compare the purification rate with respect to the air fuel ratio of different catalysts for purifying exhaust gases.

Fig. 2 is a condition graph showing the composition range of the carrier according to the invention for purifying the exhaust gases;

Fig. 3 is a relation graph of the expansion contraction ratio with respect to the temperature of the carrier of the catalyst;

Fig. 4 is a relation graph of thermal treatment temperatures and catalyst performance, and

Fig. 5 shows scanning microscope photographs of particles of the catalyst carrier.

(Comparison experiment 1)

A mixture of 30 parts by weight water added to 50 parts by weight of re-hydratable alumina and 50 parts by weight of potassium titanate ($K_2O \cdot 6TiO_2$) is kneaded for ten minutes by the use of a screw needle, thereafter is fed to a helical extruder, resulting in a honey-comb molding of a square cell, 100 mm in φ, 100 mm in length, 0.3 mm in wall thickness, 1.5 mm in one side. This is heated to 1,200°C at a temperature raising rate of 100°C per hour, and tempered for one hour at 1,200°C. The honey-comb shaped ceramics provided in this manner are used as the catalyst carrier; platinum (Pt) and rhodium (Rh) are deposited (1.0 g and 200 mg, respectively per one l catalyst carrier) on the carrier from chloroplatinate ($H_2PtCl_6$) and rhodium nitrate ($Rh(NO_3)_3$). These compounds are mixed so that the weight ratio between the Pt and the Rh is 5:1 and the carrier is exposed to an aqueous solution thereof.

The carrier is dried, and thereafter thermally processed at 500°C in $N_2$-atmosphere. It is thus used as catalyst for purifying exhaust gases.

A commercially available cordierite series catalyst carrier is used for comparison. The platinum/rhodium mixture is deposited in the same manner.

These two catalysts are evaluated by two evaluation methods.

1. The CO purification rate at 200°C in the catalyst temperature at space velocity: 20,000 $H^{-1}$, CO entrance concentration: 600 ppm (in air) is determined for catalyst purification of exahust gases. Under the conditions, the initial purifying performance and the purifying performance after 50 hours thermal treatment operation at 1,000°C in the electric furnace are measured and evaluated (Table 1).

2. The catalysts for purifying the exhaust gases are respectively placed on the exhaust gas route of a 2,800 cc vehicle mounted engine. The air/fuel ratio is varied by steps of 0.1 within the ratio of 14.0 through 15.5. The purification ratio for CO, HC, $NO_x$ gases is measured, evaluated at the initial stage and after 50 hour bench endurance.

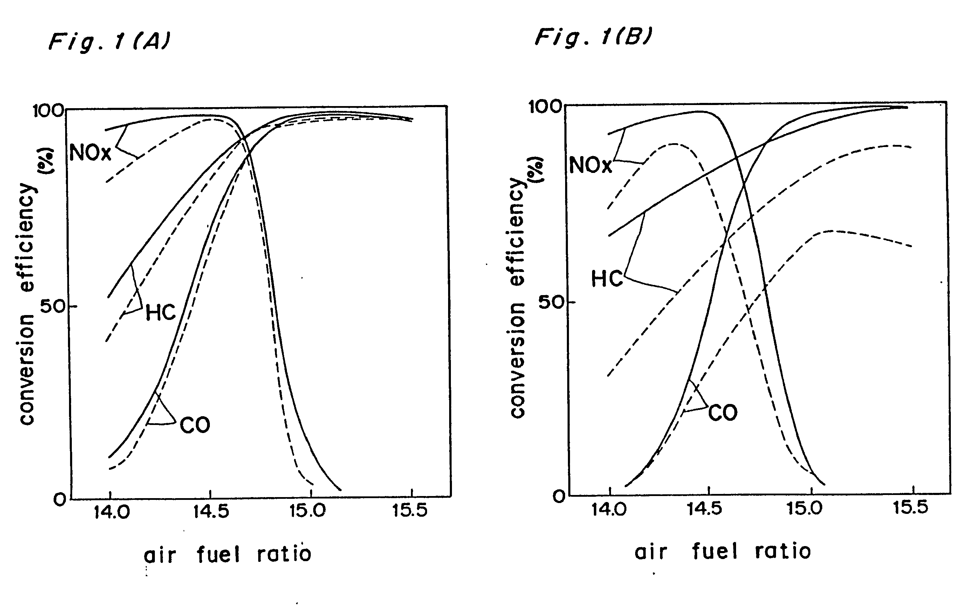

The results by evaluation method 2 are shown in Fig. 1A, B. A shows the results of the alumina/titanate carrier catalyst, B shows the results of the comparison examples composed of the cordierite series carrier.

TABLE 1

|  | Comparison experiment 1 | Catalyst derived from a commercially available cordierite catalyst carrier |
|---|---|---|
| Initial | 100% | 100% |
| After thermal processing | 89% | 65% |

As apparent from Table 1, the cordierite catalyst shows more thermal deterioration as compared with the alumina/titanate catalyst. Likewise, in the bench endurance test results shown in Figs. 1(A) and 1(B), the catalyst in the comparison example shows more deterioration from the initial stage with respect to each of CO, HC and $NO_x$ component gases.

(Comparison experiment 2)

A mixture of 4.0 parts by weight of methylcellulose as molding assistant, 2.0 parts by weight of glycerol as plasticizer, 31 parts by weight of water is added to 30 parts by weight of re-hydratable alumina, 30 parts by weight of potassium titanate ($K_2O \cdot 6TiO_2$), 40 parts by weight of synthetic cordierite powder to manufacture honey-comb shaped ceramics (sample No. 1) in the same manner as in experiment 1. In a second mixture 40 parts by weight of mullite powder, instead of 40 parts by weight of synthetic cordierite powder, are added in the composition, the honey-comb shaped ceramics being manufactured in the same manner as in sample 1 for evaluation of the thermal shock resistance. The platinum/rhodium catalyst are deposited as in experiment 1 for evalution by evaluation method 1. The results are shown in Table 2.

TABLE 2

| Sample No. | Thermal shock resistance temperature (°C) | CO conversion efficiency (%) | |
|---|---|---|---|
|  |  | Initial | After thermal treatment |
| No. 1 | 650 | 100 | 83 |
| No. 2 | 500 | 100 | 82 |

As apparent from Table 2, if synthetic cordierite powder or mullite powder are used, the ceramics are superior in thermal shock resistance further the deterioration due to the heat of catalyst performance is smaller.

If in the composition including synthetic cordierite powder or mullite powder, $\alpha$-$Al_2O_3$ is used instead of the re-hydratable alumina, and titanium oxide of anatase type is used instead of alkali titanate, the products are not satisfactory in thermal shock resistance and catalyst performance.

[Embodiment 1]

A mixture of 4.0 parts by weight of methylcellulose as molding assistant, 2.0 parts by weight of glycerol as plasticizer, 31 parts by weight of water is added to 10 parts by weight of re-hydratable alumina, five parts by weight of potassium titanate ($K_2O \cdot 6TiO_2$), 85 parts by weight of fused silica, manufacturing (sample a) the honey-comb shaped in the same manner as in experiment 1. As a comparison 85 parts by weight of synthetic cordierite powder (sample b) or mullite powder (sample c) are used respectively, instead of 85 parts by weight of fused silica, in the composition, the honey-comb shaped ceramics being manufactured in the same manner as in experiment 1 for the evaluation of thermal shock resistance. The platinum/rhodium catalyst substances are deposited as in experiment 1 for evaluation by evaluation method 1. The results are shown in Table 3.

# EP 0 207 367 B1

TABLE 3

|  | Thermal shock resistance temperature (°C) | CO conversion efficiency (%) | |
|---|---|---|---|
| Sample No. | | Initial | After thermal treatment |
| No. a | 850 | 100 | 96 |
| No. b | 700 | 100 | 81 |
| No. c | 550 | 100 | 81 |

As apparent from Table 3, ceramics according to the invention provided through the combination with fused silica, as compared to the combination with the synthetic cordierite powder or mullite powder, show less deterioration of the thermal shock resistance, and less deterioration through the heat of the catalyst performance.

[Embodiment 2]

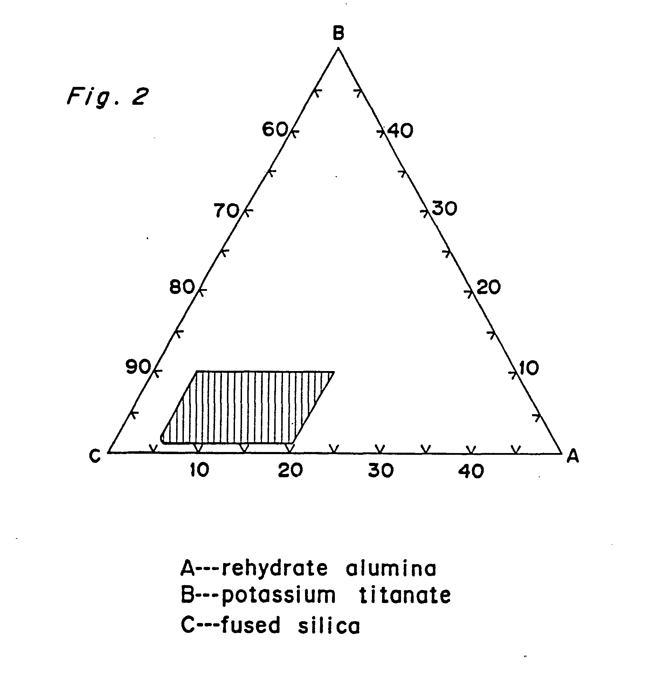

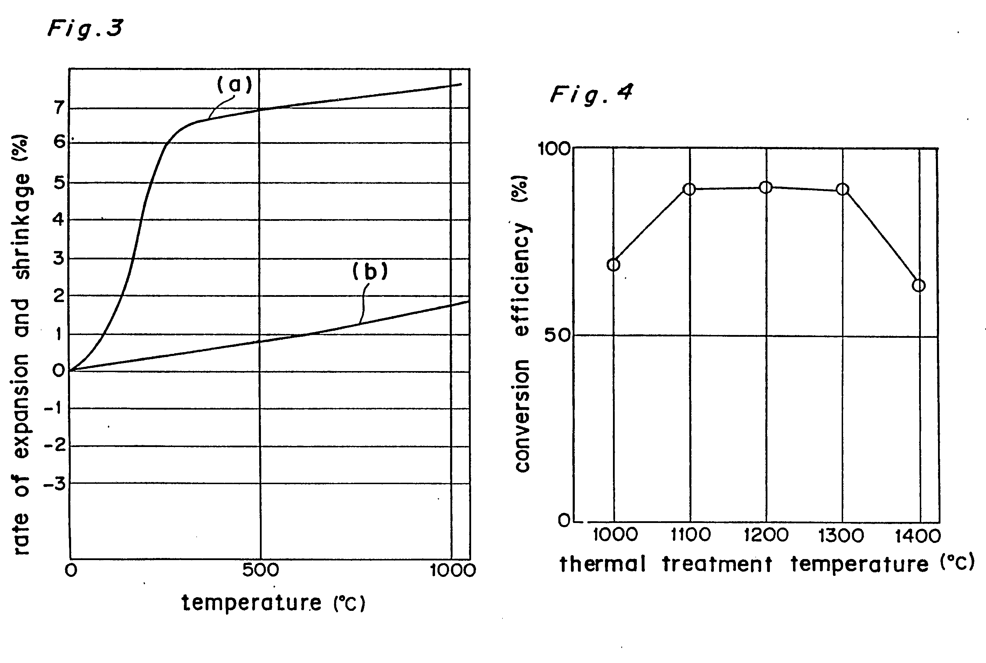

The re-hydratable alumina, potassium titanate, fused silica are varied in ratio, the molding assistant, plasticizer, water being added as in embodiment 1 and the honey-comb shaped ceramics being manufactured as in embodiment 1 for the evaluation of the thermal shock resistance. The platinum/rhodium catalyst substances are again deposited as in experiment 1 for the evaluation by method 1. As a result, the composition superior in the thermal shock resistance is in the range of 5 through 20 parts by weight of re-hydratable alumina in the inclined line portion of Fig. 2, 1 through 10 parts by weight of alkali titanate, 70 through 94 parts by weight of fused silica. Also, the thermal expansion-shrinkage ratio with respect to the temperature except for the range is as in Fig. 3(a). In the composition of the present invention, it becomes as in Fig. 3(b). It is easily considered from the curved line of (a) that partially crystallized from the fused silica, substances of cristobalite, tridymite, etc. are produced. It coincides that the thermal expansion coefficient is large, the thermal shock resistance is inferior. The catalyst performance results by evaluation method 1 are shown in Table 4.

TABLE 4

|  | Composition of the present invention | Comparison example |
|---|---|---|
| Initial | 100% | 100% |
| After thermal treatment | 96% | 75% |

As apparent from Table 4, in the composition except for the range of the present invention, the thermal deterioration is large. However, the thermal deterioration is smaller as compared with the catalyst, which derives from the conventional cordierite series catalyst carrier.

Although the reason is not apparent, it is considered that the catalyst metals platinum and rhodium are partially diffused, thus reducing the catalyst performance.

(Comparison experiment 3)

A mixture of 50 parts by weight of re-hydratable alumina, and 50 parts by weight of alkali titanate selected from lithium, sodium, potassium, rubidium, cesium, barium, strontium, calcium as the alkali component, 4.0 parts by weight of methylcellulose as the molding assistant, 2.0 parts by weight of glycerol as plasticizer, 32 parts by weight of water is used to manufacture honey-comb shaped ceramics as in experiment 1. The platinum/rhodium catalyst substances are deposited as in experiment 1 for evaluation by evaluation method 1. The results are shown in Table 5.

5

# EP 0 207 367 B1

## TABLE 5

| | | CO conversion efficiency (%) | |
|---|---|---|---|
| | Alkali titanate | Initial | After thermal treatment |
| No. 1 | Lithium titanate | 100 | 80 |
| No. 2 | Sodium titanate | 100 | 79 |
| No. 3 | Potassium titanate | 100 | 89 |
| No. 4 | Rubidium titanate | 100 | 79 |
| No. 5 | Cesium titanate | 100 | 80 |
| No. 6 | Barium titanate | 100 | 78 |
| No. 7 | Strontium titanate | 100 | 79 |
| No. 8 | Calcium titanate | 100 | 81 |

As apparent from Table 5, the compositions composed of re-hydratable alumina and each alkali titanate show small thermal deterioration. Among them, the composition with potassium titanate is especially small in thermal deterioration.

(Comparison experiment 4)

In the No. 3 honey-comb molding of experiment 3 each catalyst performance within the range of 1,000 through 1,400°C in the thermal treatment performance is measured and evaluated by evaluation method 1. The purification performance results after the thermal treatment are shown in Fig. 4. In 1,100°C or lower range of thermal treatment temperature of Fig. 4, the thermal deterioration of the catalyst is large. Also, in the range of 1,300°C or more, the thermal deterioration is large. Although the reason is not apparent, it is considered that the ceramic carrier provided at the thermal treatment temperature of 1,100°C or lower is unstable with respect to the heat, reacts with the platinum, rhodium noble metals to lower the catalyst performance. On the other hand, it is considered that the ceramic carrier provided in the thermal treatment temperature of 1,300°C or more is extremely stable with respect to the heat, but the surface is vitrified, the specific surface area becomes $1.0 \ m^2$ or lower per gram, the carrier platinum, rhodium catalyst substances are moved, diffused on the surface of the carrier to cause aggregation, causing sudden deterioration of performance.

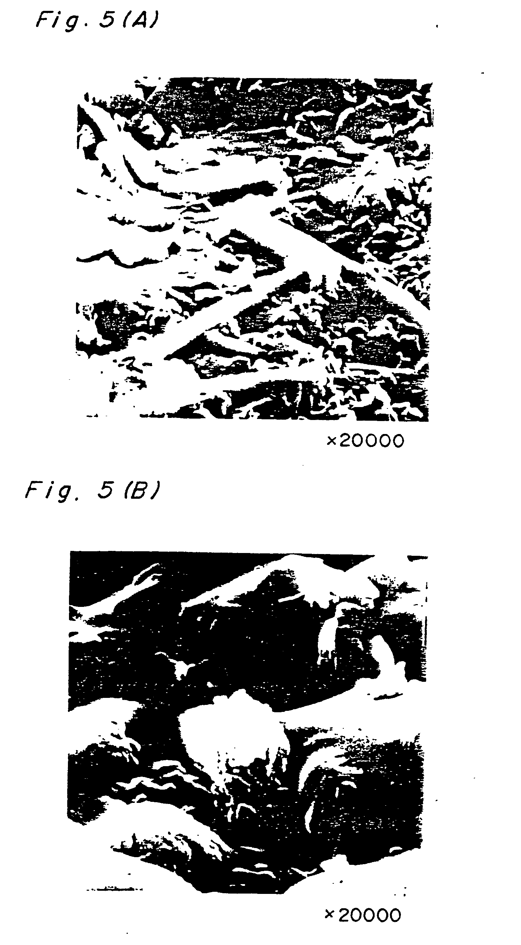

Scanning electron microscope pictures of sections of the honeycomb-shaped ceramic carrier provided through the thermal treatment at 1,000°C and sections of the honeycomb-shaped ceramic carrier provided through the thermal treatment at 1,400°C are shown in Fig. 5. Fig. 5, A shows the scanning type electron microscope photograph, at 20,000 fold magnification of the honeycomb-shaped ceramic provided through the thermal treatment at 1,000°C. Fig. 5, B shows the scanning type electron microscope photograph, at 20,000 fold magnification of the honeycomb-shaped ceramic provided through the thermal treatment at 1,400°C.

As is clear from the foregoing description, according to the present invention, the catalytic carrier ceramics which are superior in catalytic performance, further are small in thermal expansion coefficient, are superior in thermal shock resistance may be provided at lower cost at comparative lower temperatures.

**Claims**

1. A catalyst for purifying exhaust gases comprising a carrier and a catalytic compound deposited on the carrier, said carrier being a ceramic produced by heating a composition comprising a mixture of 5 to 20 parts by weight of re-hydratable alumina, 1 to 10 parts by weight of alkali or alkaline earth metal titanate, and 70 to 94 parts by weight of fused silica at a temperature of 1100 to 1300°C.

2. The catalyst according to Claim 1 wherein said catalytic compound comprises platinum and rhodium.

3. The catalyst according to Claim 1 wherein said titanate is potassium titanate.

**Patantansprüche**

1. Katalysator für die Reinigung von Auspuffgasen, der einen Träger und eine auf den Träger

6

aufgebrachte katalytische Verbindung umfaßt, bei dem der Träger eine Keramik ist, erzeugt durch Erhitzen auf eine Temperatur von 1100 bis 1300°C einer Zusammensetzung, die ein Gemisch von 5 bis 20 Gewichtsteilen re-hydratisierbares Aluminiumoxid, 1 bis 20 Gewichtsprozent Alkali- oder Erdalkalimetalltitanat und 70 bis 94 Gewichtsprozent Schmelzglas umfaßt.

2. Katalysator nach Anspruch 1, bei dem die katalytische Verbindung Platin und Rhodium umfaßt.

3. Katalysator nach Anspruch 1, bei dem das Titanat Kaliumtitanat ist.

**Revendications**

1. Un catalyseur pour purifier les gaz d'échappement comprenant un support et un composé catalytique déposé sur le support, ledit support étant une céramique produite par chauffage d'une composition comprenant un mélange de 5 à 20 parties en poids d'alumine réhydratable, 1 à 10 parties en poids de titanate de métal alcalin ou alcalino terreux, et 70 à 94 parties en poids de silice fondue à une température de 1100 à 1300°C.

2. Le catalyseur selon la revendication 1, selon lequel ledit composé catalytique comprend le platine et le rhodium.

3. Le catalyseur selon la revendication 1, selon lequel ledit titanate est du titanate de potassium.

Fig. 1(B)

Fig. 1(A)

1

Fig. 2

A---rehydrate alumina
B---potassium titanate
C---fused silica

Fig.3

Fig.4

EP 0 207 367 B1

Fig. 5 (A)

×20000

Fig. 5 (B)

×20000

4